# EUROPÄISCHE PATENTANMELDUNG

(11) **EP 2 322 901 A2**
(43) Veröffentlichungstag der Anmeldung: **18.05.2011**
(21) Anmeldenummer: 10450162.2
(22) Anmeldetag: 22.10.2010
(51) Int. Cl.: G01C 15/00, G01S 17/89, G01B 11/00

(54) **Verfahren zum Verbessern von Positions- und Lagemessdaten**

(30) Priorität: 16.11.2009 AT 18102009
(71) Anmelder: Riegl Laser Measurement Systems GmbH, 3580 Horn (AT)
(72) Erfinder: Rieger, Peter, 3824 Grossau (AT); Ullrich, Andreas, 3003 Gablitz (AT)
(74) Vertreter: Weiser, Andreas

(57) **Zusammenfassung**

Verfahren zum Verbessern der Positions- und Lagemessdaten, die von einem IMU/GNSS-Subsystem (22) eines mobilen Laserscanning-Systems (12) gemessen werden, mit den Schritten:
Laserscannen von ersten vom IMU/GNSS-Subsystem (22) gemessenen Positionen (POS₁) und Lagen (Ψ₁*) aus, um zumindest ein erstes 3D-Abbild (20) eines Umgebungsbereichs (17) zu erzeugen,
Laserscannen von zweiten vom IMU/GNSS-Subsystem (22) gemessenen Positionen (POS₂) und Lagen (Ψ₂*) aus, um zumindest ein zweites 3D-Abbild (21) des Umgebungsbereichs (17) zu erzeugen,
Detektieren ein und desselben Objekts (P, 43) in den beiden 3D-Abbildern (20, 21), und
Korrigieren zumindest einer der vom IMU/GNSS-Subsystem gemessenen Lagen (Ψ₁*, Ψ₂*) um jenen Lagemeßfehler (Ψ₁-Ψ₁*, Ψ₂-Ψ₂*) der sich aus einem Vergleich der Raumlage (41) des Objekts (43) im ersten 3D-Abbild (20) mit der Raumlage (42) des Objekts (43) im zweiten 3D-Abbild (21) ergibt, um korrigierte Lagemeßdaten (Ψ₁, Ψ₂) zu erhalten.

## Beschreibung

Die vorliegende Erfindung betrifft ein Verfahren zum Verbessern der Positions- und Lagemessdaten, die von einem IMU/GNSS-Subsystem eines mobilen Laserscanning-Systems gemessen werden.

Mobile Laserscanning-Systeme (MLS-Systeme) werden in zunehmendem Maße zur terrestrischen Landvermessung eingesetzt. Dabei wird die Topografie der Landschaft von einem bewegten Land-, Luft- oder Wasserfahrzeug aus erfasst, welches das MLS-System trägt. Die Scandaten des MLS-Systems sind in der Regel ein 3D-Abbild (eine "Punktewolke") des laserabgetasteten Umgebungsbereichs. Für die Abbildungsgenauigkeit des MLS-Systems ist es von entscheidender Bedeutung, dass seine Bewegungsbahn und -orientierung, gemessen als Abfolge von Postions- und Lagemessdaten, auch "Trajektorie" genannt, exakt bestimmt werden. Bereits Winkelabweichungen von wenigen Milligrad können über die von den Laserabtaststrahlen zurückzulegenden langen Wege zu signifikanten Mess- und damit Abbildungsfehlern des MLS-Systems führen.

Zur Messung der Position und Lage (der Trajektorie) des MLS-Systems wird häufig ein von diesem mitgeführtes Trägheitsmess-Subsystem ("inertial measurement unit", IMU) in Verbindung mit einem Satellitennavigations-Subsystem ("global navigation satellite system", GNSS) verwendet. Das IMU/GNSS-Subsystem ermittelt fortlaufend die Positionen und Lagen und damit die Trajektorie des MLS-Systems in einem gegenüber Weltkoordinaten kalibrierbaren Referenzsystem, so dass die Scandaten des MLS-Systems darauf bezogen werden können.

In der Praxis zeigt sich jedoch, dass die Messgenauigkeit von IMU/GNSS-Subsystemen häufig zu wünschen übrig lässt. Die Ursachen können mannigfaltig sein, beispielsweise Abschattungen der Line-of-Sight (LOS) vom GNSS-Empfänger zu den Satelliten durch Gebäude oder Vegetation, Mehrwegeausbreitung der GNSS-Signale, oder vollständiger Verlust der GNSS-Signale beim Durchfahren von Tunnels. Auch nicht exakt genordete oder horizontierte IMU-Subsysteme verursachen Fehler, ebenso wie die Langzeitdrift von IMU-Subsystemen. Alle diese Fehler zeigen sich unmittelbar in den vom MLS-System erzeugten Scandaten, z.B. 3D-Abbildern, als Verzerrungen, Kantensprünge usw. der abgebildeten Umgebung.

Die Erfindung setzt sich demgemäß zum Ziel, ein Verfahren zum Verbessern der Positions- und Lagemessdaten des IMU/GNSS-Subsystems eines MLS-Systems zu schaffen. Dieses Ziel wird erfindungsgemäß mit einem Verfahren erreicht, das sich durch folgende Schritte auszeichnet:
Laserscannen von ersten vom IMU/GNSS-Subsystem gemessenen Positionen und Lagen aus, um zumindest ein erstes 3D-Abbild eines Umgebungsbereichs zu erzeugen,
Laserscannen von zweiten vom IMU/GNSS-Subsystem gemessenen Positionen und Lagen aus, um zumindest ein zweites 3D-Abbild des Umgebungsbereichs zu erzeugen,
Detektieren ein und desselben Objekts in den beiden 3D-Abbildern, und
Korrigieren zumindest einer der vom IMU/GNSS-Subsystem gemessenen Lagen um jenen Lagemessfehler, der sich aus einem Vergleich der Raumlage des Objekts im ersten 3D-Abbild mit der Raumlage des Objekts im zweiten 3D-Abbild ergibt, um korrigierte Lagemeßdaten zu erhalten.

Auf diese Weise werden erstmals die vom MLS-System erzeugten 3D-Abbilder direkt zur Verbesserung jener Trajektorie, auf der sie beruhen, verwendet. Die Erfindung gründet sich auf die Erkenntnis, dass durch zweimaliges Laserscannen ein- und desselben Umgebungsbereichs und Detektieren der Raumlagenänderung eines Objekts in den beiden so erzeugten 3D-Abbildern auf die Messfehler der Positionen und/oder Lagen, von denen die beiden 3D-Abbildern aus gescannt wurden, geschlossen werden kann. Dabei ist die Korrektur der Lagemessfehler besonders vorteilhaft, weil diese über die langen von den Laserabtaststrahlen zurückzulegenden Wege zu besonders signifikanten Messfehlern führen.

In einer optionalen Ausführungsform des Verfahrens können jedoch auch die vom IMU/GNSS-Subsystem gemessenen Positionen um jene Positionsmessfehler korrigiert werden, die sich aus dem genannten Vergleich der Raumlagen des in den beiden 3D-Abbildern detektierten Objekts ergeben. Es sei an dieser Stelle erwähnt, dass der hier verwendete Begriff "Raumlage" eines Objekts sowohl seine Position als auch Lage (Orientierung) im Bildraum des 3D-Abbilds umfasst.

Gemäß einer besonders vorteilhaften Ausführungsform der Erfindung wird das Verfahren für eine Vielzahl aufeinanderfolgender, eine Trajektorie bildender Positionen und Lagen fortschreitend wiederholt, und zwar jeweils auf zwei in der Trajektorie aufeinanderfolgende Positionen und Lagen angewandt, um die Messgenauigkeit der Trajektorie zu verbessern.

Die zur Objektdetektion durchzuführende Bildverarbeitung kann beschleunigt werden, wenn gemäß einem weiteren Merkmal der Erfindung der Lagemessfehler aus der Raumwinkeldifferenz einer ausgewählten Raumachse des Objekts, bereinigt um die Unterschiede zwischen den ersten und zweiten Positionen und Lagen, bestimmt wird.

Bevorzugt wird als Objekt eine im Umgebungsbereich detektierte Fläche und als genannte Raumachse deren Flächennormale ausgewählt, wodurch Implementierungen mit besonders geringen Rechenzeiten erreicht werden können.

Grundsätzlich könnten die beiden 3D-Abbilder mit Hilfe eines MLS-Systems mit nur einem einzigen Laserscanner erzeugt werden, der zweimal an ein und demselben Umgebungsbereich vorbeigeführt wird. Besonders vorteilhaft ist es jedoch, wenn die beiden 3D-Abbilder mittels eines zwei Laserscanner umfassenden MLS-Systems erzeugt werden, das die beiden Laserscanner in kurzem zeitlichem Abstand an demselben Umgebungsbereich abtastend vorbeiführt.

Die beiden Laserscanner können dazu im MLS-System bevorzugt mit vorgegebenem Abstand und vorgegebener Relativlage zueinander angeordnet werden und/oder jeweils Laserstrahlen in einer Abtastebene aussenden und mit zueinander geneigten Abtastebenen angeordnet werden. Letztere Laserscanner können, wie dem Fachmann bekannt, insbesondere auch Hinterschneidungen im Umgebungsbereich erfassen.

Gemäß einer weiteren bevorzugten Ausführungsform der Erfindungen können zusätzlich Kamerabilder des Umgebungsbereichs von den ersten und zweiten Positionen und Lagen aus gemacht werden, welche beim Detektieren des Objekts in den 3D-Abbildern unterstützend herangezogen werden. Dabei können insbesondere aus einer gemeinsamen Auswertung der Kamerabilder und der 3D-Abbilder signifikante Punkte eines Objekts detektiert werden, um dieses in den 3D-Abbildern zu detektieren.

Die Erfindung wird nachstehend anhand eines in den beigeschlossenen Zeichnungen dargestellten Ausführungsbeispiels näher erläutert. In den Zeichnungen zeigen:
die Fig. 1a und 1b ein MLS-System mit einem IMU/GNSS-Subsystem zur Durchführung des Verfahrens der Erfindung einmal in der Verwendungsstellung in einer Perspektivansicht und einmal ausschnittsweise in der Draufsicht;
Fig. 2 zwei beispielhafte 3D-Abbilder, wie sie von einem MLS-System mit zwei Laserscannern erzeugt werden, vor und nach deren Kalibrierung;
Fig. 3 beispielhafte Strahlverläufe und Messfehler während der Bewegung eines MLS-Systems entlang einer Trajektorie in zwei beispielhaften Positionen und Lagen; und
Fig. 4 den Schritt des Vergleichens der Raumlagen eines in den beiden 3D-Abbildern detektierten Objekts.

In integrierten IMU/GNSS-Systemen werden Position und Lage über eine Datenfusion aus Rohdaten bestimmt, wobei die Rohdaten aus Laufzeitmessungen zu Satelliten eines GNSS stammen, sowie Drehraten aus Gyroskopen und Linearbeschleunigungen aus Accelerometern einer IMU zu den Rohdaten beitragen.

Die Position bezieht sich bevorzugt auf ein geozentrisches, kartesisches Koordinatensystem (ECEF, Earth Centered - Earth Fixed) 1. Die Lage wird in Bezug auf ein lokales Horizontalsystem (Navigationskoordinatensystem) interpretiert. Ein oft gebrauchtes Navigationskoordinatensystem ist im Luftfahrtstandard ARINC 705 beschrieben, bei welchem die Nordrichtung (x-Achse) und die Ostrichtung (y-Achse) in der Tangentialebene zum Erdellipsoid liegen und die Hochachse (z-Achse) parallel zur Schwerebeschleunigung in Richtung Erdkern weist.

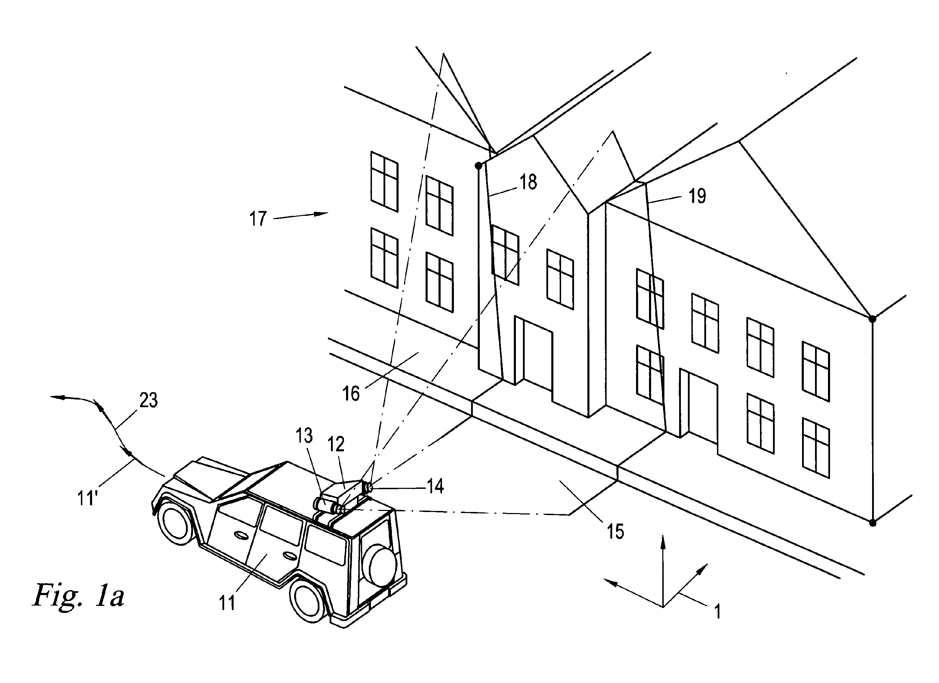

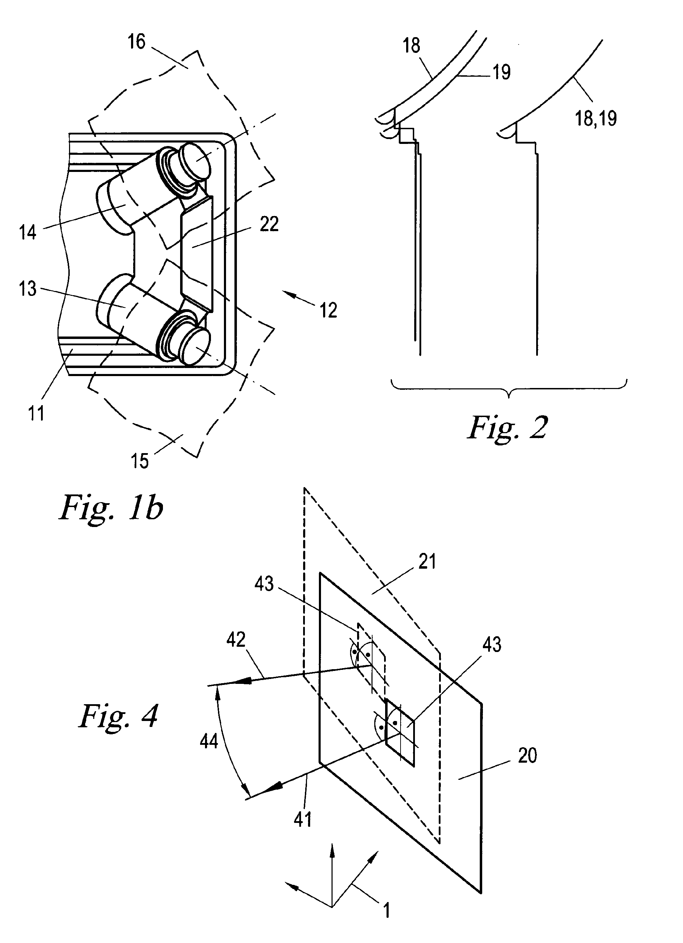

Mobile Laserscanning-Systeme (MLS-Systeme) bestehen zumeist aus einem IMU/GNSS-Subsystem, Laserscannern, Digitalkameras und etwaigen weiteren Sensoren. Die vorliegenden Überlegungen basieren auf einem MLS-System aus einem IMU/GNSS-Subsystem sowie zumindest zwei Laserscannern, deren Erfassungsbereiche zu einem Zeitpunkt räumlich nicht zusammenfallen, aber durch die Bewegung des Systems dennoch zu einem großen Teil dieselben Objekte erfassen. Ein derartiges System ist in Fig. 1 als Beispiel abgebildet.

Gemäß Fig. 1 ist auf einem Beförderungsmittel 11, z.B. einem Geländewagen, ein MLS-System 12 montiert. Anstelle des gezeigten Geländewagens mit Dachträger kann das Beförderungsmittel 11 jedes beliebige andere Land-, Luft- oder Wasserfahrzeug sein, sowohl motor- als auch muskel-kraftbetrieben, z.B. ein LKW, ein Schienenfahrzeug, ein Boot, eine Lore, eine Laufkatze oder im einfachsten Fall auch nur eine Trage.

Das MLS-System 12 umfasst im gezeigten Beispiel zwei 360°-2D-Laserscanner 13, 14, wie sie beispielsweise unter der Marke VQ® mit der Typenbezeichnung 250 von der Firma Riegl Laser Measurement Systems GmbH in Horn, Österreich, hergestellt werden. Jeder der 360°-2D-Laserscanner 13, 14 sendet einen Laserstrahlfächer 15, 16 über einen vollen Umfangswinkelbereich von 360° (siehe Fig. 1b) auf einen Umgebungsbereich 17 aus, um je ein 2D-Profil 18, 19 der Umgebung 17 zu erfassen. Durch Bewegung des Beförderungsmittels 11 in einer abtastebenenfremden Fahrtrichtung 11' wird somit aus mehreren aufeinanderfolgenden 2D-Profilen 18, 19 von jedem Laserscanner 13, 14 ein 3D-Abbild 20, 21 (siehe Fig. 2 und 4) der Umgebung 17 erstellt.

Das MLS-System 12 umfasst ferner ein IMU/GNSS-Subsystem 22, das sich aus einem Trägheitsmess-Subsystem (IMU) und einem Satellitennavigations-Subsystem (GNSS) zusammensetzt, um fortlaufend die Position und Lage (Orientierung) des MLS-Systems 12, d.h. seine Bewegungsbahn und -orientierung, die sog. Trajektorie 23, im Weltkoordinatensystem 1 zu bestimmen.

Wie dem Fachmann bekannt, wird während des Laserscannens - oder auch erst in einer späteren Offline-Auswertung - die vom IMU/GNSS-Subsystem 22 ermittelte Trajektorie 23 berücksichtigt, um die vom MLS-System 12 erfassten 2D-Profile 18, 19 bzw. 3D-Abbilder 20, 21 auf die Trajektorie 23 zu beziehen und so als korrekt ausgerichtete 3D-Abbilder 20, 21 der Umgebung 17 in einem Weltkoordinatensystem 1 aufzubauen.

Die beiden Laserscanner 13, 14 werden dazu im MLS-System 12 mit gegenseitigem Abstand und/oder zueinander geneigt angeordnet, so dass sie bei der Fortbewegung des Beförderungsmittels 11 einen Umgebungsbereich 17 in kurzen Abständen aufeinanderfolgend abtasten. Damit werden zwei 3D-Abbilder 20, 21 ein und desselben Umgebungsbereich 17 - wenn auch von unterschiedlichen Positionen und Lagen (Orientierungen, Blickwinkeln) aus - erzeugt.

Nach einer Messfahrt stehen somit mehrere Rohdatensätze zur Verfügung:
- Laserscandaten
- IMU/GNSS-Rohdaten
- GNSS-Referenzstationsdaten

Die Aufbereitung der IMU/GNSS-Daten unter Berücksichtigung der GNSS-Referenzstationsdaten liefert die Positions- und Lageinformation des IMU/GNSS-Systems über der Zeit. Mit diesem Datensatz, der sogenannten Trajektorie, können bei bekannter Orientierung der Laserscanner in Bezug auf das IMU/GNSS-System die Laserscandaten in ein ECEF-System bzw. eine Projektion übergeführt werden ("Geo-Referenzieren"). Das Ergebnis ist eine sogenannte Punktewolke der Laserscandaten im ECEF-System.

Im Allgemeinen weist die Punktewolke zu diesem Zeitpunkt Lagefehler auf, d.h. gescannte Objekte erscheinen zweimal in der Punktewolke, da die genaue Einbaulage der beiden Scanner in Bezug auf die IMU-Lageinformation noch nicht bestimmt wurde. Die Ermittlung der sogenannten "Systemkalibration" erfolgt nun basierend auf dieser Punktewolke, und sobald die Korrekturwerte bei der erneut durchzuführenden Geo-Referenzierung berücksichtigt wurden, ist die Punktwolke frei von Lagefehlern - sämtliche gescannte Objekte erscheinen nur noch einmal und zeigen so ein Abbild der tatsächlichen räumlichen Gegebenheiten (Fig. 2).

Sofern ein derartiges MLS-System vor seinem Einsatz exakt genordet und horizontiert wird und sich die Einbaulage der Sensoren zueinander nicht ändert (mechanische Stabilität), werden stets reproduzierbar gute Ergebnisse erzielbar sein.

Es zeigt sich jedoch, dass mit einem MLS-System selbst bei ausgezeichneter Systemkalibration, d.h. wenn sämtliche Vorschriften zum korrekten Alignment des IMU/GNSS-Systems eingehalten werden, unter bestimmten Umständen die Punktewolken der beiden Scanner nicht "zur Deckung" gebracht werden können. Die Ursache hierfür können Abschattungen der Line-of-sight (LOS) vom GNSS-Empfänger zu den Satelliten durch Gebäude oder Vegetation, Mehrwegeausbreitung der GNSS-Signale oder ein vollständiger Verlust der GNSS-Signale z.B. beim Durchfahren von Tunnels sein. Auch ein nicht exakt genordetes und horizontiertes IMU/GNSS-System könnte solche Fehler verursachen.

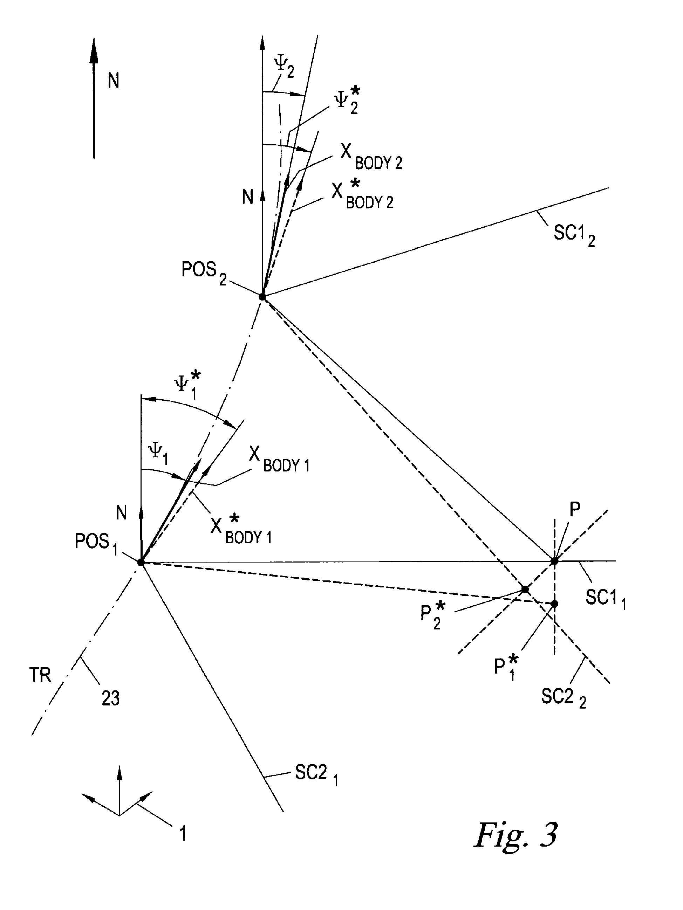

Derartige Fehler zeigen sich unmittelbar in den Scandaten: Ein MLS-System liefert trotz bekannter Systemkalibration wiederum Scandaten, welche nicht zur Deckung gebracht werden können. Zur Veranschaulichung wird auf Fig. 3 verwiesen.

Fig. 3 zeigt das MLS-System 12 mit zwei Laserscannern 13, 14 in zwei unterschiedlichen Positionen, POS₁, und POS₂. Das MLS-System bewegt sich entlang der tatsächlichen Trajektorie 23 bzw. TR (strichpunktierte Linie). Es wird angenommen, dass die Orientierung der Laserscanner im MLS-eigenen Koordinatensystem ("Body-Koordinatensystem") durch Systemkalibrierung bekannt und zeitlich unveränderlich ist. Die x-Koordinate des Body-Koordinatensystems ist durch die Vektoren X_{BODY1} und X_{BODY2} (durchgezogene Pfeile) in den beiden Positionen angedeutet. Diese Vektoren schließen mit der tatsächlichen Nordrichtung die Kurswinkel Ψ₁ und Ψ₂ ein.

In der Position POS₁ wird durch den ersten 2D-Laserscanner 13 mit dem Messfächer 15 (angedeutet durch den Strahl SC1) der Raumpunkt P erfasst. In der Position POS₂ erfasst der Messstrahl des zweiten 2D-Laserscanners 14 denselben Raumpunkt P.

Liefert das IMU/GNSS-Subsystem 22 nach der Nachverarbeitung zwar korrekte Positionen, aber falsche Kurswinkel (Ψ₁* und Ψ₂*) in den Positionen POS₁ und POS₂, so werden nach der Geo-Referenzierung der Laserscandaten die Messwerte, die für den Raumpunkt P gewonnen wurden, an unterschiedlichen Raumpositionen P₁* und P₂* zu liegen kommen.

Da die Entfernungen zu P aufgrund der Entfernungsmessungen der Laserscanner bekannt sind (Abstand POS₁ zu P und POS₂ zu P), können aus bekannten Positionen die Kurswinkel Ψ₁ und Ψ₂ bestimmt werden. Sind die Positionen mit Messfehlern behaftet, so werden diese auch in die Bestimmung der Kurswinkel Eingang finden. Bei hinreichend großer Basislänge (Abstand der Positionen POS₁ und POS₂) werden die Winkelmessfehler aufgrund der fehlerbehafteten Positionsmessung jedoch klein bleiben. Somit können aus Lasermessungen und ersten Positionsschätzungen Stützwerte für eine verbesserte Berechnung der Trajektorie ermittelt werden, speziell zur Auflösung von Phasenmehrdeutigkeiten bei minderer GNSS-Rohdatenqualität, z.B. bei sogenannten "GNSS outages" in dicht verbautem Gebiet.

Was in Fig. 3 nur zweidimensional für eine Verbesserung des Kurswinkels dargestellt ist, trifft in der Praxis des mobilen Laserscannings auch auf die Situation in 3D zu, sodass auch eine Verbesserung der Nick- und Rollwinkel (um die Achsen Y_{BODY1} und Y_{BODY2} und Z_{BODY1} und Z_{BODY2} ) zu erwarten ist.

Eine Stützung der Lageinformation (Roll-, Nick- und Kurswinkel) kann auch über Bildinformation gewonnen werden, wenn optional zumindest eine Kamera, die mit dem Body-Koordinatensystem fix und in bekannter Weise verbunden ist, an den Positionen POS₁ und POS₂ Bilder von denselben Objekten liefert. Mit ausreichend vielen identifizierbaren signifikanten Punkten ("Verknüpfungspunkten") in den Bildern kann darüber hinaus auch eine Verbesserung der Bestimmung der Positionen errechnet werden.

Da das Identifizieren solcher signifikanten Punkte in den 3D-Abbildern keine einfache Aufgabe ist, ist es günstig, Objekte in den Scandaten zu detektieren, und dies stellt eine vorteilhafte Erweiterung des Verfahrens dar. Als günstige Objekte sind Kugeln, Zylinder, Flächenstücke und Kanten anzusehen. Da diese Objekte nicht zu einem einzigen Zeitpunkt von den Laserscannern erfasst werden, ist die so gewonnene Stützinformation auf den Zeitraum der Erfassung der Objekte anzuwenden.

Dazu wird gemäß Fig. 4 in den beiden 3D-Abbildern 20, 21 jeweils ein und dasselbe Objekt 43 detektiert bzw. identifiziert, beispielsweise durch Musterdetektionsverfahren an sich bekannter Art. Im gezeigten Beispiel ist das Objekt 43 ein flacher Bereich eines im Umgebungsbereich 17 vorliegenden Gebäudes.

Anschließend wird die jeweilige Raumlage des Objekts 43 in den 3D-Abbilder 20, 21 ermittelt, und zwar bevorzugt anhand einer ausgewählten, z.B. leicht identifizierbaren Raumachse des Objekts 43. Bevorzugt wird als Objekt 43 eine Fläche ausgewählt, und die Lage (Orientierung) der Flächennormalen 41, 42 in Verbindung mit den Orten (Positionen) des Objekts 43 in den 3D-Abbildern 20, 21 geben seine jeweilige Raumlage an.

Aus der Differenz der so ermittelten Raumlagen, d.h. der Raumwinkeldifferenz 44 und der Positionsdifferenz des Objekts 43 in den 3D-Abbildern 20, 21, lässt sich anschließend in Kenntnis der ersten und zweiten Positionen POS₁, POS₂ und Lagen Ψ₁ und Ψ₂ bzw. Ψ₁* und Ψ₂* auf die Lagemessfehler Ψ₁ - Ψ₁ * , Ψ₂ - Ψ₂* usw. der Trajektorie 23 schließen, wie anhand von Fig. 3 erläutert. Optional können auch die zuvor vorläufig ermittelten Positionsschätzungen POS₁ und POS₂ der Trajektorie 23 anhand der Positionsmessfehler korrigiert werden, welche sich aus diesem Vergleich ergeben.

Ebenso kann eine von Laserscannern als sogenannte Amplitudeninformation bzw. Information über den Reflexionsgrad der erfassten Objekte gewonnene Information zur Bestimmung der Stützinformationen mit herangezogen werden. Damit werden z.B. über retroreflektierende Marken sogenannte signalisierte Punkte für die Auswertung zugänglich, oder auch unterschiedliche Anstriche auf ebenen Flächen (Straßenmarkierungen, Fassaden).

Ferner kann bei einer bekannten geometrischen Kopplung einer Kamera und der Laserscanner die Punktewolke der Laserscanner automatisch eingefärbt werden. Damit stehen bei dieser Punktewolke mit Farbinformation weitere Möglichkeiten zur Detektion von Korrespondenzen offen.

Diesen Umstand kann man sich zur Stützung bzw. Verbesserung der Genauigkeit der Lagebestimmung durch das IMU/GNSS System zunutze machen.

Dazu gibt es bevorzugt folgende Möglichkeiten:
- Während der Datenaufbereitung (Post-Processing) wird nach korrespondierenden Objekten im Überlappungsbereich der beiden Scans (3D-Abbilder) gesucht. Weisen die beiden korrespondierenden Objekte einen Lagefehler auf, kann daraus und aus dem Wissen der Positionen, Lagen, Scandistanzen und Scanwinkel, von wo aus die Objekte gescannt wurden, auf die Größe des Lagemessfehlers des IMU/GNSS-Systems zurückgeschlossen werden. Diese Information kann in einem weiteren Schritt wiederum zur Korrektur der bereits berechneten Trajektorie dienen.
- Unter der Annahme, dass der Lagemessfehler des IMU/GNSS-Systems über der Zeit nicht konstant ist, kann man diese Korrektur während des Post-Processing auch für einen zeitlich unbegrenzten Zeitraum laufend neu bestimmen, wenn die Beobachtungen (als korrespondierend, detektierende Flächen) jeweils in einem kleinen zeitlichen Abstand analysiert werden. Es gibt dann einen Korrekturwert, welcher für jeden Zeitpunkt der gesamten Messfahrt bestimmt wurde und zur erneuten Berechnung der Trajektorie mittels Kalmanfilterung beitragen kann.
- Möglich ist es auch, dieselbe Methode in Echtzeit einzusetzen, wenn das verwendete IMU/GNSS-System RTK-fähig ("real time kinematic"-fähig) ist. Derartige Systeme erhalten die erforderlichen GNSS-Korrekturdaten in Echtzeit, beispielsweise via GPRS, und liefern Positions- und Lagedaten meist mit guter Genauigkeit. Zur Stützung dieser Messungen können die aus den Lagemessfehlern von in kurzen Zeitabständen aufgefundenen Objekten, wie Flächen, bestimmten Korrekturwinkel ebenso dem Kalmanfilter zugeführt werden.

Die Erfindung ist demgemäß nicht auf die dargestellte Ausführungsformen beschränkt, sondern umfasst alle Varianten und Modifikationen, die in den Rahmen der angeschlossenen Ansprüche fallen.

## Patentansprüche

1. Verfahren zum Verbessern der Positions- und Lagemessdaten, die von einem IMU/GNSS-Subsystem (22) eines mobilen Laserscanning-Systems (12) gemessen werden, **gekennzeichnet durch** die Schritte:
Laserscannen von ersten vom IMU/GNSS-Subsystem (22) gemessenen Positionen (POS₁) und Lagen (Ψ₁*) aus, um zumindest ein erstes 3D-Abbild (20) eines Umgebungsbereichs (17) zu erzeugen,
Laserscannen von zweiten vom IMU/GNSS-Subsystem (22) gemessenen Positionen (POS₂) und Lagen (Ψ₂*) aus, um zumindest ein zweites 3D-Abbild (21) des Umgebungsbereichs (17) zu erzeugen,
Detektieren ein und desselben Objekts (P, 43) in den beiden 3D-Abbildern (20, 21), und
Korrigieren zumindest einer der vom IMU/GNSS-Subsystem gemessenen Lagen (Ψ₁*, Ψ₂*) um jenen Lagemeßfehler (Ψ₁―Ψ₁*, Ψ₂-Ψ₂*) der sich aus einem Vergleich der Raumlage (41) des Objekts (43) im ersten 3D-Abbild (20) mit der Raumlage (42) des Objekts (43) im zweiten 3D-Abbild (21) ergibt, um korrigierte Lagemeßdaten (Ψ₁, Ψ₂) zu erhalten.

2. Verfahren nach Anspruch 1, **gekennzeichnet durch** den weiteren Schritt des Korrigierens zumindest einer der vom IMU/GNSS-Subsystem gemessenen Positionen (POS₁, POS₂) um jenen Positionsmessfehler, der sich aus dem genannten Vergleich ergibt.

3. Verfahren nach Anspruch 1 oder 2, **dadurch gekennzeichnet, dass** es für eine Vielzahl aufeinanderfolgender, eine Trajektorie (TR, 23) bildender Positionen und Lagen (POS₁, POS₂) fortschreitend wiederholt wird, und zwar jeweils auf zwei in der Trajektorie (TR, 23) aufeinanderfolgende Positionen und Lagen (POS₁, POS₂) angewandt, um die Messgenauigkeit der Trajektorie (TR, 23) zu verbessern.

4. Verfahren nach einem der Ansprüche 1 bis 3, **dadurch gekennzeichnet, dass** der Lagemessfehler aus der Raumwinkeldifferenz (44) einer ausgewählten Raumachse (41, 42) des Objekts (43), bereinigt um die Unterschiede zwischen den ersten und zweiten Positionen und Lagen, bestimmt wird.

5. Verfahren nach Anspruch 4, **dadurch gekennzeichnet, dass** als Objekt (43) eine im Umgebungsbereich detektierte Fläche und als genannte Raumachse (41, 42) deren Flächennormale ausgewählt wird.

6. Verfahren nach einem der Ansprüche 1 bis 5, **dadurch gekennzeichnet, dass** die beiden 3D-Abbilder (20, 21) mittels eines zwei Laserscanner (13, 14) umfassenden mobilen Laserscanning-Systems (12) erzeugt werden, von welchem die beiden Laserscanner (13, 14) in kurzem zeitlichem Abstand an demselben Umgebungsbereich (17) abtastend vorbeigeführt werden.

7. Verfahren nach Anspruch 6, **dadurch gekennzeichnet, dass** die beiden Laserscanner (13, 14) im mobilen Laserscanning-System (12) mit vorgegebenem Abstand und vorgegebener Relativlage zueinander angeordnet werden.

8. Verfahren nach Anspruch 6 oder 7, **dadurch gekennzeichnet, dass** die beiden Laserscanner (13, 14) jeweils Laserstrahlen in einer Abtastebene (15, 16) aussenden und im mobilen Laserscanning-System (12) mit zueinander geneigten Abtastebenen (15, 16) angeordnet werden.

9. Verfahren nach einem der Ansprüche 1 bis 8, **dadurch gekennzeichnet, dass** zusätzlich Kamerabilder des Umgebungsbereichs von den ersten und zweiten Positionen und Lagen (POS₁, POS₂) aus gemacht werden, welche beim Detektieren des Objekts (43) in den 3D-Abbildern (20, 21) unterstützend herangezogen werden.

10. Verfahren nach Anspruch 9, **dadurch gekennzeichnet, dass** aus einer gemeinsamen Auswertung der Kamerabilder und der 3D-Abbilder (20, 21) signifikante Punkte eines Objekts (43) detektiert werden, um dieses in den 3D-Abbildern (20, 21) zu detektieren.
